# EUROPÄISCHE PATENTSCHRIFT

(11) **EP 3 174 761 B1**
(45) Veröffentlichungstag und Bekanntmachung des Hinweises auf die Patenterteilung: **15.08.2018**
(21) Anmeldenummer: 15730446.0
(22) Anmeldetag: 12.06.2015
(51) Int. Cl.: B60Q 1/32, B60Q 1/50, F21V 5/00, F21S 43/20

(54) **BELEUCHTUNGSVORRICHTUNG ZUM ERZEUGEN EINER OPTISCHEN MARKIERUNG**
LIGHTING DEVICE FOR PRODUCING AN OPTICAL MARKING
DISPOSITIF D'ÉCLAIRAGE POUR L'ÉMISSION D'UN MARQUEUR OPTIQUE

(30) Priorität: 30.07.2014 DE 102014214930
(43) Veröffentlichungstag der Anmeldung: 07.06.2017
(73) Patentinhaber: Volkswagen Aktiengesellschaft, 38440 Wolfsburg (DE)
(72) Erfinder: ETTE, Bernd, 38442 Wolfsburg (DE)
(86) Internationale Anmeldenummer: PCT/EP2015/063169
(87) Internationale Veröffentlichungsnummer: WO 2016/015910

(56) Entgegenhaltungen:
- DE-U1-202014 101 755
- FR-A1- 2 949 725
- US-A1- 2005 117 364
- US-A1- 2014 191 859

## Beschreibung

Die vorliegende Erfindung betrifft eine Beleuchtungsvorrichtung zum Erzeugen einer optischen Markierung in einem Bereich außerhalb eines Fahrzeugs. Die vorliegende Erfindung betrifft insbesondere eine Beleuchtungsvorrichtung, welche in Verbindung mit einer Gestenerkennungsvorrichtung verwendet werden kann, welche einen Bereich vor einer Öffnung des Fahrzeugs optisch überwacht und aufgrund einer erfassten Geste oder Bewegung in dem Bereich einen Mechanismus zum Öffnen oder Schließen der Öffnung des Fahrzeugs ansteuert.

Zum Öffnen oder Schließen einer Öffnung eines Fahrzeugs, beispielsweise einer Tür oder einer Heckklappe eines Personenkraftwagens, ist im Allgemeinen eine entsprechende Betätigung per Hand erforderlich. Um ein entsprechendes Öffnen oder Schließen der Fahrzeugöffnung auch zu ermöglichen, wenn gerade keine Hand frei ist, da beispielsweise beide Hände zum Tragen einer Last benötigt werden, werden in dem Stand der Technik Verfahren zum berührungslosen Öffnen oder Schließen einer entsprechenden Öffnung des Fahrzeugs offenbart.

Die WO 2013/037465 A1 betrifft beispielsweise eine optische Messvorrichtung für ein Fahrzeug mit einem optischen Sender, welcher eine Sendestrahlung erzeugt und in einen Überwachungsbereich abstrahlt, und einen optischen Empfänger, welcher eine resultierende Empfangsstrahlung aus dem Überwachungsbereich empfängt. Eine Auswerte- und Steuereinheit wertet die Empfangsstrahlung zur Objekterkennung aus. Um eine optische Messvorrichtung für ein Fahrzeug zur Verfügung zu stellen, welche eine vereinfachte Auslösung eines Schaltvorgangs ohne manuelle Betätigung und ohne vorgegebene Gestik ermöglicht, erzeugt ein erster optischer Sender durch Aussenden einer gerichteten ersten Sendestrahlung ein erstes Lichtfeld mit einer vorgegebenen Form auf einer Oberfläche im Überwachungsbereich und ein zweiter optischer Sender erzeugt durch Aussenden einer gerichteten zweiten Sendestrahlung ein zweites Lichtfeld mit einer vorgegebenen Form im benachbarten Umfeld des ersten Lichtfelds. Das erste Lichtfeld kann beispielsweise eine einseitig offene Form, vorzugsweise eine U-Form bzw. Hufeisenform aufweisen, welche aus mehreren Lichtpunkten zusammengesetzt werden kann.

Die DE 10 2008 025 669 A1 betrifft ein Fahrzeug mit einem Sensor zum Detektieren des Vorhandenenseins eines Fahrzeuginsassen und einem anderen Sensor zum Detektieren einer Insassenantwort in Bezug auf ein automatisches Öffnen eines Fahrzeugschließelements. Ein Aktor öffnet das Schließelement, wenn das Vorhandensein und die Antwort des Insassen detektiert werden. Ein Signal von einem Sender außerhalb des Fahrzeugs signalisiert ein Insassenvorhandensein. Der Insassenantwortsensor kann einen Sender aufweisen, um einen Lichtstrahl auf eine Fläche zu projizieren. Die detektierte Insassenantwort stellt eine Beeinflussung des Pfads des Lichtstrahls unter Verwendung einer Geste dar.

Die DE 20 2014 101 755 U1 betrifft eine Fahrzeugumfeldbeleuchtungsanordnung, welche ein animiertes Bild erzeugt. Die Fahrzeugumfeldbeleuchtungsanordnung umfasst mehrere Lichtprojektoren, die sich an einem Fahrzeug befinden und dazu konfiguriert sind, verschiedene ausgeleuchtete Bildmuster auf eine Oberfläche neben dem Fahrzeug zu werfen, und eine Steuerung zur sequenziellen Aktivierung der mehreren Lichtprojektoren zur Erzeugung eines animierten ausgeleuchteten Bildes auf der Oberfläche.

Für die Signalisierung von entsprechenden Bedienstellen von Fahrzeugöffnungen, beispielsweise einer Heckklappe des Fahrzeugs, können Lichtpunkte oder Lichtbereiche, sogenannte Spots, auf dem Boden oder an der Fahrzeugkarosserie eingesetzt werden. Diese optischen Signalisierungen kennzeichnen die Bedienschnittstellen zum Öffnen und Schließen der Fahrzeugöffnung. Die Bedienschnittstelle zeigt sichtbar den Erfassungsbereich des Sensors an, in welchem die Bewegung des Fahrzeugbenutzers erfasst wird. Zum Ausleuchten dieses Bereichs kann vorzugsweise künstliches Licht, von beispielsweise einem Laser oder von Leuchtdioden (LED) verwendet werden. Hierzu ist es notwendig, eine optische Markierung, einen sogenannten Spot, auf einer Fläche oder reflektierenden Oberfläche zu projizieren. Das ausgegebene künstliche Licht ist hierbei auf der einen Seite zu maximieren, um die Darstellung auf der Oberfläche sicher zu stellen und eine gute Erkennbarkeit zu erreichen, und andererseits zu minimieren, um die Augensicherheit sicher zu stellen, d.h., um sicher zu stellen, dass der Benutzer nicht geblendet wird oder sogar eine Augenverletzung durch eine zu hohe Lichtintensität erleidet.

Aufgabe der vorliegenden Erfindung ist es daher, eine Beleuchtungsvorrichtung bereitzustellen, welche eine geeignete optische Markierung erzeugt.

Diese Aufgabe wird gemäß der vorliegenden Erfindung durch eine Beleuchtungsvorrichtung zum Erzeugen einer optischen Markierung in einem Bereich außerhalb eines Fahrzeugs nach Anspruch 1 und ein Fahrzeug nach Anspruch 10 gelöst. Die abhängigen Ansprüche definieren bevorzugte und vorteilhafte Ausführungsformen der Erfindung.

Gemäß einem ersten Aspekt der vorliegenden Erfindung wird eine Beleuchtungsvorrichtung zum Erzeugen einer optischen Markierung in einem Bereich außerhalb eines Fahrzeugs bereitgestellt. Der Bereich umfasst beispielsweise einen Bodenbereich außerhalb des Fahrzeugs oder einen Körperbereich eines Benutzers, welcher sich außerhalb des Fahrzeugs befindet, z.B. einen Arm, eine Hand, ein Bein oder einen Fuß des Benutzers. Die Beleuchtungsvorrichtung umfasst eine Lichtquelle, welche in Abhängigkeit von einer Ansteuerung wahlweise Licht mit unterschiedlicher Wellenlänge erzeugen kann. Die Beleuchtungsvorrichtung umfasst ferner eine optische Vorrichtung, welche in der Lage ist, in Abhängigkeit von einer Wellenlänge von Licht, welches auf die optische Vorrichtung einfällt, unterschiedliche Lichtmuster auszugeben, welche als die optische Markierung in dem Bereich außerhalb des Fahrzeugs verwendbar sind. Schließlich umfasst die Beleuchtungsvorrichtung eine Steuervorrichtung, welche mit der Lichtquelle gekoppelt ist und diese ansteuert. Die Beleuchtungsvorrichtung ist somit in der Lage, ohne mechanische Hilfsmittel, wie zum Beispiel motorisch angetriebene Spiegelverstellungen oder motorisch angetriebene Linsensysteme, veränderliche Muster in dem Bereich außerhalb des Fahrzeugs abzubilden. Dadurch können beispielsweise zuverlässig erkennbare Muster auf unterschiedlichen Untergründen dargestellt werden oder Bewegungsmuster dargestellt werden, welche einem Benutzer zeigen, welche Gesten zum Öffnen oder Schließen von einer Öffnung des Fahrzeugs, beispielsweise einer Heckklappe oder einer Seitentür des Fahrzeugs, auszuführen sind.

Gemäß einer Ausführungsform ist die Lichtquelle in der Lage, aufgrund der Ansteuerung Licht wahlweise in zumindest einem ersten Wellenlängenbereich oder in einem zweiten Wellenlängenbereich zu erzeugen. Der erste Wellenlängenbereich und der zweite Wellenlängenbereich sind unterschiedlich. Beispielsweise kann der erste Wellenlängenbereich im Wesentlichen grünes Licht umfassen und der zweite Wellenlängenbereich im Wesentlichen rotes Licht. Darüber hinaus kann die Lichtquelle ferner ausgestaltet sein, Licht in weiteren Wellenlängenbereichen zu erzeugen, beispielsweise in einem dritten Wellenlängenbereich, welcher im Wesentlichen blaues Licht umfasst. Die Lichtquelle kann beispielsweise eine mehrfarbige Leuchtdiodenvorrichtung umfassen, welche beispielsweise in der Lage ist, rotes, grünes und blaues Licht zu erzeugen. Eine derartige Leuchtdiode wird auch als RGB-Leuchtdiode bezeichnet. Alternativ kann die Lichtquelle eine mehrfarbige Laservorrichtung umfassen, welche mehrere Laser mit unterschiedlichen Wellenlängen aufweist. In Abhängigkeit von der Ansteuerung kann die Lichtquelle somit beispielsweise rotes, grünes, oder blaues Licht erzeugen oder Mischfarben, welche sich aus rotem, grünem und/oder blauem Licht zusammensetzen. In Verbindung mit der optischen Vorrichtung können dann mehrere unterschiedliche Lichtmuster zeitlich nacheinander oder gleichzeitig erzeugt werden.

Gemäß einer weiteren Ausführungsform umfasst die optische Vorrichtung ein Hologramm. Das Hologramm kann beispielsweise ein Transmissionhologramm oder ein Refexionshologramm sein. Ferner kann das Hologramm wahlweise in Verbindung mit Laserlicht oder Licht von einer Leuchtdiode verwendet werden. Bei einem Hologramm wird der Wellencharakter des einfallenden Lichts ausgenutzt, insbesondere seine Interferenz- und Kohärenzmöglichkeiten, um komplexe optische Muster zu erzeugen, welche in Abhängigkeit von einer Änderung der Wellenlänge des einfallenden Lichts starken Veränderungen unterworfen sind. Dadurch können insbesondere zum Beispiel Muster erzeugt werden, welche in Abhängigkeit von der einfallenden Wellenlänge ihre Position in dem Bereich außerhalb des Fahrzeugs ändern, sodass der Eindruck eines sich bewegenden Musters entsteht.

Die unterschiedlichen Lichtmuster, welche in Abhängigkeit von der Wellenlänge des Lichts erzeugt werden, welches auf die optische Vorrichtung, insbesondere auf das Hologramm, einfällt, können beispielsweise Kreissegmente unterschiedlicher Größe, unterschiedlicher Form oder unterschiedlicher Ausrichtung umfassen. Darüber hinaus können die Kreissegmente an unterschiedlichen Positionen ausgegeben werden. Dadurch kann beispielsweise der Erfassungsbereich einer gestenbasierten Steuerung intuitiv dargestellt werden. Alternativ oder zusätzlich können die unterschiedlichen Lichtmuster Linien unterschiedlicher Größe in unterschiedlicher Form, in unterschiedlicher Ausrichtung und an unterschiedlichen Positionen umfassen. Weiterhin können die unterschiedlichen Lichtmuster Punkte oder Kreise unterschiedlicher Größe, in unterschiedlicher Anzahl, an unterschiedlichen Positionen oder Punktkombinationen in unterschiedlicher Ausrichtung umfassen. Mit den Punkten oder Linien kann beispielsweise ein Lauflicht realisiert werden, welches eine Bewegung einer Geste für eine Gestensteuerung zum Öffnen oder Schließen einer Fahrzeugöffnung darstellt. Darüber hinaus können beliebige Motive aus den zuvor genannten graphischen Elementen zusammengesetzt werden.

Gemäß noch einer weiteren Ausführungsform umfasst die Beleuchtungsvorrichtung zusätzlich eine diffraktive Optik zum Projizieren des von der optischen Vorrichtung erzeugten Lichtmusters auf den Bereich. Die Verwendung einer diffraktiven Optik bietet gegenüber herkömmlichen Linsen-basierten optischen Systemen verschiedene Vorteile, beispielsweise kann die diffraktive Optik wie ein Siliziumsensor hergestellt werden, wodurch ein aufwendiges Schleifen und Polieren, wie bei einer Glasoptik, entfallen kann. Ferner kann die diffraktive Optik aus Glas oder Kunststoff gefertigt werden, sodass ein kostengünstiges Material verwendet werden kann. In der diffraktiven Optik können komplexe Optiksysteme in z.B. einer Folie auf engstem Raum untergebracht werden. Dadurch kann die diffraktive Optik auch in beengten Einbausituationen verwendet werden. Die diffraktive Optik ermöglicht einen großen Abstrahlwinkel oder Öffnungswinkel, wodurch der Bereich, in welchem die optische Markierung in dem Bereich ausgegeben werden kann, sehr weit ausgelegt werden kann. Ferner sind bei der diffraktiven Optik die Einbautoleranzen verhältnismäßig groß, sodass ein Winkel und eine Position der Lichtquelle zu der diffraktiven Optik über einen weiten Bereich variiert werden kann, wodurch keine aufwendige Justierung der Lichtquelle zu der diffraktiven Optik erforderlich ist. Schließlich ist der Transmissionsfaktor der diffraktiven Optik verhältnismäßig hoch, wodurch eine hohe Beleuchtungsstärke des beleuchteten Bereichs mit geringem energetischen Lichteinsatz möglich ist.

Bei einer weiteren Ausführungsform ist die Steuervorrichtung mit einer Gestenerkennungsvorrichtung des Fahrzeugs koppelbar oder integriert mit der Gestenerkennungsvorrichtung ausgebildet. Die Gestenerkennungsvorrichtung ist in der Lage, eine von einem Benutzer des Fahrzeugs in dem Bereich ausgeführte Geste zu erkennen und eine Umgebungshelligkeit in dem Bereich zu erfassen. Die Steuervorrichtung ist in der Lage, die Wellenlänge des von der Lichtquelle ausgegebenen Lichts in Abhängigkeit von der Umgebungshelligkeit einzustellen. Da das von der optischen Vorrichtung erzeugte Lichtmuster von der von der Lichtquelle einfallenden Wellenlänge abhängt, kann beispielsweise bei einer hohen Umgebungshelligkeit ein Lichtmuster erzeugt werden, welches eine geringere Fläche beleuchtet als ein Lichtmuster, welches erzeugt wird, wenn eine geringe Umgebungshelligkeit erkannt wird. Dadurch kann eine Lichtintensität des erzeugten Lichtmusters an die gemessene Umgebungshelligkeit angepasst werden.

Weiterhin können die Intensität und die Wellenlänge des von der Lichtquelle ausgegebenen Lichts in Abhängigkeit von der Umgebungshelligkeit eingestellt werden.

Zusätzlich kann die Gestenerkennungsvorrichtung in der Lage sein, eine Farbe des Untergrunds des Bereichs zu erfassen und die Steuervorrichtung ausgestaltet sein, die Wellenlänge des von der Lichtquelle ausgegebenen Lichts in Abhängigkeit von der erfassten Farbe des Untergrunds in dem Bereich einzustellen. Dadurch kann sicher gestellt werden, dass ein ausreichender Kontrast zwischen der Farbe des Untergrunds und der Farbe des Lichtmusters vorhanden ist. Beispielsweise kann sichergestellt werden, dass keine Komplementärfarben, die zur Auslöschung führen können, dargestellt werden.

Weiterhin kann die Gestenerkennungsvorrichtung in der Lage sein, eine Beschaffenheit eines Bodens in dem Bereich zu erfassen, um eine entsprechende Bodenbeschaffenheitsinformation für die Steuervorrichtung bereitzustellen. Die Bodenbeschaffenheitsinformation kann beispielsweise Informationen bezüglich Reflexionseigenschaften des Bodenbereichs, einer Farbe des Bodenbereichs und/oder einer Oberflächenbeschaffenheit des Bodenbereichs umfassen. Beispielsweise kann die Reflexionseigenschaft des Bodenbereichs durch Feuchtigkeit aufgrund von Regen oder Schnee stark unterschiedlich sein. Durch eine entsprechende Ansteuerung der Lichtquelle können geeignete Lichtmuster als optische Markierungen erzeugt und ausgegeben werden, welche gut sichtbar sind.

Bei einer weiteren Ausführungsform ist die Steuervorrichtung derart ausgestaltet, dass sie die Lichtquelle so ansteuert, dass die Lichtquelle in zeitlicher Folge Licht mit unterschiedlicher Wellenlänge erzeugt. Die von der optischen Vorrichtung ausgegebene zeitliche Folge von unterschiedlichen Lichtmustern ergibt ein Lauflicht in dem Bereich. Das Lauflicht kann beispielsweise einen Lichtpunkt umfassen, einen sogenannten Spot, welcher sich entlang einer vorgegebenen Bahn oder Richtung in dem Bereich bewegt. Alternativ oder zusätzlich können Linien, beispielsweise gebogene Linien, ein Lauflicht ergeben, welches beispielsweise eine Bewegungsrichtung auf das Fahrzeug zu oder von dem Fahrzeug weg darstellt.

Gemäß einem weiteren Aspekt der vorliegenden Erfindung wird ein Fahrzeug mit der zuvor beschriebenen Beleuchtungsvorrichtung und einer Fahrzeugöffnung bereitgestellt. Die Fahrzeugöffnung ist beispielsweise eine Tür des Fahrzeugs, eine Heckklappe des Fahrzeugs oder ein Kofferraumdeckel des Fahrzeugs. Die Beleuchtungsvorrichtung ist derart an dem Fahrzeug angeordnet, dass der Bereich, in welchem die Beleuchtungsvorrichtung die optische Markierung erzeugt, einen Bereich vor der Fahrzeugöffnung umfasst. In Verbindung mit einer Gestenerkennungsvorrichtung, welche eine Geste eines Fahrzeugbenutzers zum Öffnen oder Schließen der Fahrzeugöffnung erkennt, kann somit mit der Beleuchtungsvorrichtung ein Bedienbereich für die Gestenerkennung optisch markiert werden. Dadurch kann eine Bedienung der Gestenerkennung vereinfacht werden. Ferner können einem Benutzer mittels der erzeugten optischen Markierungen symbolisch und intuitiv Bedienhinweise für die Gestenerkennung gegeben werden. Ferner kann die optische Markierung auch auf eine Hand oder einen Fuß des Benutzers projiziert werden, um die mögliche Gestik anzuzeigen, sofern ein optischer Empfänger der Gestenerkennung den Abstand zu der Hand oder dem Fuß erkennt.

Die vorliegende Erfindung wird nachfolgend unter Bezugnahme auf die Zeichnungen im Detail beschrieben werden.
Fig. 1 zeigt eine schematische Perspektivansicht eines Fahrzeugs gemäß einer Ausführungsform der vorliegenden Erfindung.
Fig. 2 zeigt eine schematische Schnittansicht eines Teilbereichs des Fahrzeugs der Fig. 1.
Fig. 3 zeigt schematisch eine optische Markierung, welche von einer Beleuchtungsvorrichtung gemäß einer Ausführungsform der vorliegenden Erfindung erzeugt wird.
Fig. 4 zeigt schematisch einen Aufbau einer Beleuchtungsvorrichtung gemäß einer Ausführungsform der vorliegenden Erfindung.

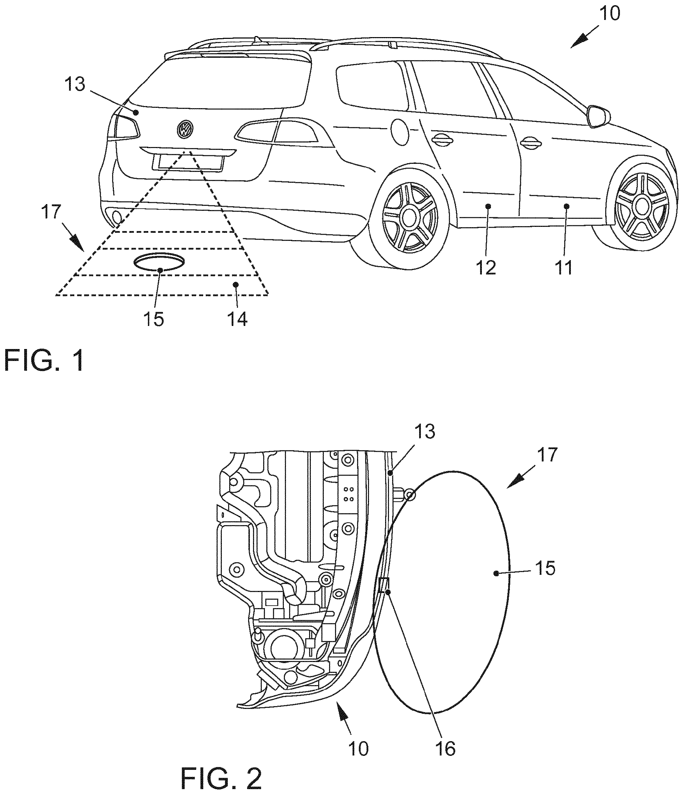

Fig. 1 zeigt schematisch eine perspektivische Rückansicht eines Fahrzeugs 10. Das Fahrzeug 10 umfasst mehrere Fahrzeugöffnungen, wie zum Beispiel eine vordere Seitentür 11, eine hintere Seitentür 12 und eine Heckklappe 13. Zum Öffnen und Schließen weisen die Fahrzeugtüren und die Heckklappe jeweils entsprechende Griffe auf. Die Fahrzeugtüren 11, 12 und/oder die Heckklappe 13 können jeweils Vorrichtungen umfassen, welche es ermöglichen, dass die entsprechende Tür oder Heckklappe aufgrund einer Geste eines Benutzers oder aufgrund einer Annäherung eines Benutzers an das Fahrzeug automatisch geöffnet oder geschlossen werden. Dies wird im Detail anhand der Heckklappe 13 nachfolgend beschrieben werden.

Die Heckklappe 13 umfasst einen motorischen Antrieb, welcher aufgrund einer geeigneten Ansteuerung die Heckklappe 13 automatisch öffnet oder schließt. Die zuvor beschriebene Vorrichtung zur Erfassung von Gesten des Benutzers und zum Ansteuern des motorischen Antriebs der Heckklappe 13 kann beispielsweise einen Bereich 14 hinter der Heckklappe 13 optisch überwachen und bei einer Annäherung des Benutzers an das Fahrzeug 10 die Heckklappe 13 automatische öffnen. Dazu kann es beispielsweise zusätzlich erforderlich sein, dass der Benutzer einen Transponder mit sich führt, dessen Anwesenheit von einer entsprechenden Sende- und Empfangsvorrichtung des Fahrzeugs 10 überwacht wird, und dass der Benutzer eine bestimmte Geste mit beispielsweise einer Hand oder einem Fuß ausführt, um den Wunsch zum Öffnen der Heckklappe 13 zu signalisieren. Die Geste kann beispielsweise eine Schwenkbewegung sein, welche von einer Fußspitze des Benutzers auszuführen ist. Um dem Benutzer zu signalisieren, dass sein Transponder erkannt wurde und die Heckklappe 13 durch eine entsprechende Geste geöffnet werden kann, verfügt das Fahrzeug 10 über eine Beleuchtungsvorrichtung, welche eine optische Markierung 15 in einem Bereich 17, insbesondere auf einem Bodenbereich, außerhalb des Fahrzeugs 10 hinter der Heckklappe 13 erzeugt. Der Erfassungsbereich 14, in welchem beispielsweise eine Fußgeste des Benutzers erfasst werden kann, erstreckt sich um die Markierung 15, welche auch als Spot bezeichnet wird.

Fig. 2 zeigt eine teilweise Schnittansicht des hinteren Bereichs des Fahrzeugs 10. An der Heckklappe 13 ist eine Beleuchtungsvorrichtung 16 vorgesehen, welche die optische Markierung 15 auf dem Bodenbereich 17 hinter dem Fahrzeug 10 erzeugt.

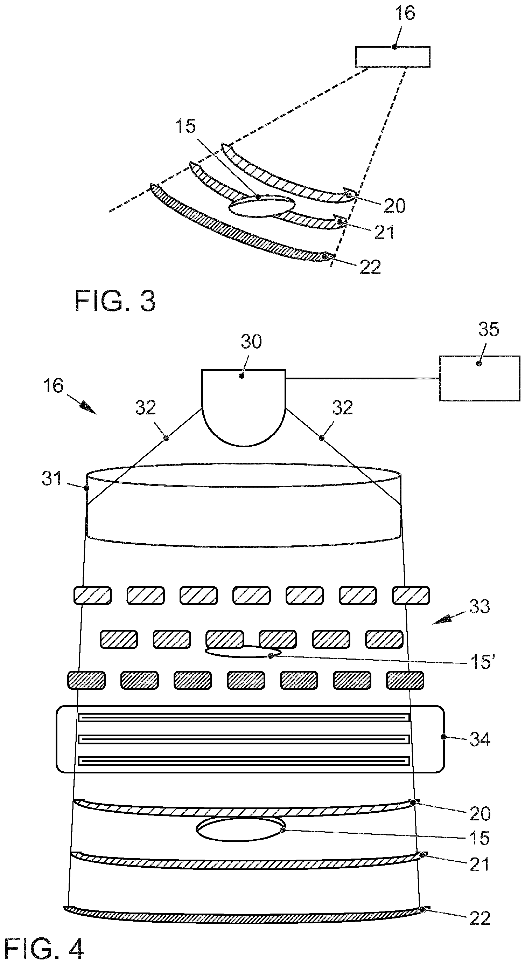

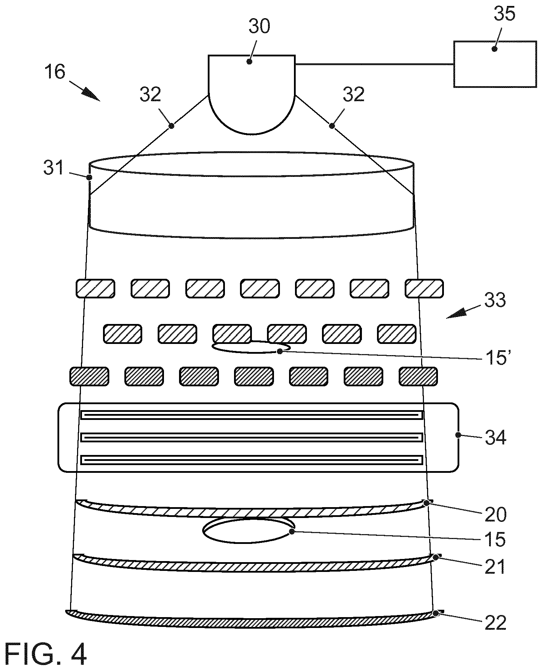

An eine Darstellung der optischen Markierung 15 zum Anzeigen einer optischen Bedienschnittstelle für die Ausführung einer Geste werden verschiedene Anforderungen gestellt. Z.B. soll die Sichtbarkeit des optischen Spots bei möglichst vielen Umweltbedingungen gewährleistet sein, beispielsweise bei starker Sonnenstrahlung, bei Regen und auf unterschiedlichen Bodenbelägen, wie zum Beispiel Asphalt, Schotter oder einer Wiese. Eine Verwendung von beliebig hellem Licht ist im Allgemeinen aus Augensicherheitsgründen nicht möglich. Beispielsweise sind bei der Verwendung von Lasern zur Erzeugung der optischen Markierung 15 entsprechende Laserschutzklassen einzuhalten. Daher kann es vorteilhaft sein, neben den in den Figuren 1 und 2 gezeigten kreisförmigen optischen Markierungen 15 auch andere Muster zu verwenden, beispielsweise Bogensegmente 20 bis 22, welche in Fig. 3 gezeigt sind, sowie eine Darstellung dieser optischen Muster in unterschiedlichen Farben. Die Beleuchtungsvorrichtung 16 ist daher derart ausgestaltet, dass sie unterschiedliche Lichtmuster als optische Markierung ausgeben kann. Der Aufbau der Beleuchtungsvorrichtung 16 wird nachfolgend unter Bezugnahme auf Fig. 4 im Detail beschrieben.

Fig. 4 zeigt eine schematische Querschnittsansicht der Beleuchtungsvorrichtung 16. Die Beleuchtungsvorrichtung 16 umfasst eine Lichtquelle 30, beispielsweise eine mehrfarbige Leuchtdiode, insbesondere eine sogenannte RGB LED, oder einen mehrfarbigen Laser. Bei Verwendung einer Leuchtdiode als Lichtquelle 30 kann eine Sammellinse 31 vorgesehen sein, um Lichtstrahlen 32 von der Leuchtdiode zu bündeln. Das gebündelte Licht von der Lichtquelle 30 wird dann durch ein Transmissionshologramm 33 geleitet, welches in Abhängigkeit einer Wellenlänge des auf das Transmissionshologramm einfallenden Lichts unterschiedliche Lichtmuster erzeugt und ausgibt. Beispielsweise kann das Transmissionshologramm bei einer ersten Wellenlänge oder einem ersten Wellenlängenbereich das erste bogenförmige Lichtmuster 20 erzeugen, bei einer zweiten Wellenlänge oder einem zweiten Wellenlängenbereich das zweite bogenförmige Lichtmuster 21 erzeugen und bei einer dritten Wellenlänge oder einem dritten Wellenlängenbereich das dritte bogenförmige Lichtmuster 22 erzeugen. Ferner kann das Transmissionshologramm 33 zusätzlich bei allen drei Wellenlängen oder Wellenlängenbereichen den kreisförmigen Spot 15 als Lichtmuster erzeugen. Mittels einer diffraktiven Optik 34 können die von dem Transmissionshologramm 33 erzeugten Lichtmuster auf den Bodenbereich 17 projiziert werden. Beispielhaft ist in Fig. 4 die Erzeugung des kreisförmigen Spots 15 in dem Transmissionshologramm 33 als Lichtmuster 15 gezeigt.

Die Beleuchtungsvorrichtung 16 umfasst ferner eine Steuervorrichtung 35, welche mit der Lichtquelle 30 gekoppelt ist und in der Lage ist, die Lichtquelle 30 derart anzusteuern, dass die Lichtquelle 30 in Abhängigkeit von der Ansteuerung wahlweise Licht mit unterschiedlicher Wellenlänge erzeugt. Die Beleuchtungsvorrichtung 16 kann somit wahlweise in Abhängigkeit von der Ansteuerung von der Steuervorrichtung 35 unterschiedliche Lichtmuster als optische Markierungen ausgeben. Beispielsweise können durch eine zeitlich sequentielle Ansteuerung der Lichtquelle 30 die Farben rot, grün und blau ausgegeben werden, wodurch die Lichtmuster 20, 21 und 22 zeitlich nacheinander erzeugt und ausgegeben werden. Dadurch kann beispielsweise ein Lauflicht erzeugt werden. Weiterhin kann die Steuervorrichtung 35 mit der Vorrichtung zur Erfassung der Gesten gekoppelt oder integriert damit ausgebildet sein und Informationen bezüglich einer Umgebungshelligkeit und einer Beschaffenheit des Untergrunds 17 von der Gestenerfassungsvorrichtung erhalten. In Abhängigkeit von der erfassten Umgebungshelligkeit kann beispielsweise die Helligkeit der Lichtquelle 30 angepasst werden oder das Lichtmuster geändert werden. Beispielsweise kann bei großer Umgebungshelligkeit ein Lichtmuster mit punktförmigen oder linienförmigen Elementen erzeugt werden, wohingegen bei Dunkelheit, beispielsweise in der Nacht oder in einer Tiefgarage, flächige Lichtmuster erzeugt werden. Dadurch kann bei gleicher Lichtintensität der Lichtquelle 30 sowohl bei großer Helligkeit, als auch bei geringer Helligkeit eine von einem Benutzer als angenehm empfundene optische Markierung ausgegeben werden. Darüber hinaus kann die Farbe der optischen Markierung in Abhängigkeit von der Beschaffenheit des Untergrunds angepasst werden, beispielsweise kann auf einem grünen Untergrund, wie zum Beispiel einer Wiese, eine blaue oder eine rote Markierung ausgegeben werden, wohingegen auf einem schwarzen Untergrund, beispielsweise Asphalt, eine rote Markierung ausgegeben werden kann. Zusammenfassend kann somit eine gute Sichtbarkeit der optischen Markierung bei unterschiedlichen Lichtverhältnissen sicher gestellt werden, insbesondere auch bei sonnigen, hellen Lichtverhältnissen. Ferner kann die Lichtquelle 30 mit verhältnismäßig geringer Energie betrieben werden, wodurch der Energieverbrauch der Beleuchtungsvorrichtung verringert werden kann und ferner die Augensicherheit, beispielsweise bei Verwendung eines Lasers, zuverlässig eingehalten werden. Ferner werden unterschiedlich reflektive Oberflächen gleichermaßen gut ausgeleuchtet. Schließlich können unterschiedliche Muster oder auch Symbole und bewegte Muster, wie zum Beispiel ein Lauflicht, kostengünstig und auf einfache Art und Weise erzeugt werden, ohne dass die Beleuchtungsvorrichtung 16 mechanisch bewegliche Elemente umfasst. Durch die an die Umgebung angepassten Lichtmuster kann bei geringer Lichtleistung der Lichtquelle 30 der Ausleuchtungsbereich vergrößert werden. Dadurch kann beispielsweise auf eine automatische Abschaltung der Beleuchtungsvorrichtung bei einer Annäherung des Benutzers mit einem Fernglas oder einer Lupe verzichtet werden, sodass Kosten eingespart werden.

### Bezugszeichenliste

- 10: Fahrzeug
- 11: vordere Seitentür
- 12: hintere Seitentür
- 13: Heckklappe
- 14: Erfassungsbereich
- 15: optische Markierung
- 16: Beleuchtungsvorrichtung
- 17: Bereich
- 20-22: Lichtmuster
- 30: Lichtquelle
- 31: Sammellinse
- 32: Lichtstrahlen
- 33: Hologramm
- 34: diffraktive Optik
- 35: Steuervorrichtung

## Patentansprüche

1. Beleuchtungsvorrichtung zum Erzeugen einer optischen Markierung in einem Bereich außerhalb eines Fahrzeugs, **gekennzeichnet durch**:
- eine Lichtquelle (30), welche ausgestaltet ist, in Abhängigkeit von einer Ansteuerung wahlweise Licht mit unterschiedlicher Wellenlänge zu erzeugen,
- eine optische Vorrichtung (33), welche ausgestaltet ist, in Abhängigkeit von einer Wellenlänge von auf die optische Vorrichtung (33) einfallendem Licht unterschiedliche Lichtmuster (15, 20-22) als die optische Markierung auszugeben, und
- eine Steuervorrichtung (35) zur Ansteuerung der Lichtquelle (30).

2. Beleuchtungsvorrichtung nach Anspruch 1, **dadurch gekennzeichnet, dass** die Lichtquelle (30) ausgestaltet ist, in Abhängigkeit von der Ansteuerung wahlweise Licht in zumindest einem ersten Wellenlängenbereich oder in einem zweiten Wellenlängenbereich zu erzeugen, wobei der erste Wellenlängenbereich und der zweite Wellenlängenbereich unterschiedlich sind.

3. Beleuchtungsvorrichtung nach Anspruch 1 oder 2, **dadurch gekennzeichnet, dass** die Lichtquelle (30)
- eine mehrfarbige Leuchtdiodenvorrichtung oder
- eine mehrfarbige Laservorrichtung umfasst.

4. Beleuchtungsvorrichtung nach einem der vorhergehenden Ansprüche, **dadurch gekennzeichnet, dass** die optische Vorrichtung (33) ein Hologramm umfasst.

5. Beleuchtungsvorrichtung nach einem der vorhergehenden Ansprüche, **dadurch gekennzeichnet, dass** die unterschiedlichen Lichtmuster (15, 20-22) umfassen:
- Kreissegmente unterschiedlicher Größe,
- Kreissegmente unterschiedlicher Form
- Kreissegmente unterschiedlicher Ausrichtung,
- Kreissegmente an unterschiedlichen Positionen,
- Linien (20-22) unterschiedlicher Größe,
- Linien (20-22) unterschiedlicher Form
- Linien (20-22) unterschiedlicher Ausrichtung,
- Linien (20-22) an unterschiedlichen Positionen,
- Punkte (15) unterschiedlicher Größe,
- Punkte (15) in unterschiedlicher Anzahl,
- Punkte (15) an unterschiedlichen Positionen, und/oder
- Punktkombinationen in unterschiedlicher Ausrichtung.

6. Beleuchtungsvorrichtung nach einem der vorhergehenden Ansprüche, **dadurch gekennzeichnet, dass** die Beleuchtungsvorrichtung (16) ferner eine diffraktive Optik (34) zum Projizieren des von der optischen Vorrichtung (33) erzeugten Lichtmusters (15, 20-22) in dem Bereich (17) umfasst.

7. Beleuchtungsvorrichtung nach einem der vorhergehenden Ansprüche, wobei die Steuervorrichtung (35) ferner mit einer Gestenerkennungsvorrichtung des Fahrzeugs (10) koppelbar ist, welche ausgestaltet ist, eine von einem Benutzer des Fahrzeugs (10) in dem Bereich (17) ausgeführte Geste zu erkennen und eine Umgebungshelligkeit in dem Bereich (17) zu erfassen,
**dadurch gekennzeichnet, dass** die Steuervorrichtung (35) ausgestaltet ist, die Wellenlänge des von der Lichtquelle (30) ausgegebenen Lichts in Abhängigkeit von der Umgebungshelligkeit einzustellen.

8. Beleuchtungsvorrichtung nach einem der vorhergehenden Ansprüche, wobei die Steuervorrichtung (35) ferner mit einer Gestenerkennungsvorrichtung des Fahrzeugs (10) koppelbar ist, welche ausgestaltet ist, eine von einem Benutzer des Fahrzeugs (10) in dem Bereich (17) ausgeführte Geste zu erkennen und eine Bodenbeschaffenheitsinformation bereitzustellen, welche eine Beschaffenheit eines Bodens in dem Bereich (17) anzeigt,
**dadurch gekennzeichnet, dass** die Steuervorrichtung (35) ausgestaltet ist, eine Wellenlänge des von der Lichtquelle (30) ausgegebenen Lichts in Abhängigkeit von der Bodenbeschaffenheitsinformation einzustellen.

9. Beleuchtungsvorrichtung nach einem der vorhergehenden Ansprüche, **dadurch gekennzeichnet, dass** die Steuervorrichtung (35) ausgestaltet ist, die Lichtquelle (30) derart anzusteuern, dass die Lichtquelle (30) in zeitlicher Folge Licht mit unterschiedlicher Wellenlänge derart erzeugt, dass die von der optischen Vorrichtung (33) ausgegebene zeitlich Folge von unterschiedlichen Lichtmustern (15, 20-22) ein Lauflicht in dem Bereich (17) ergibt.

10. Fahrzeug, umfassend:
- eine Beleuchtungsvorrichtung (16) nach einem der vorhergehenden Ansprüche, und
- eine Fahrzeugöffnung (11-13),
wobei die Beleuchtungsvorrichtung (16) derart an dem Fahrzeug (10) angeordnet ist, dass der Bereich (17), auf welchem die Beleuchtungsvorrichtung (16) die optische Markierung erzeugt, einen Bereich vor der Fahrzeugöffnung (11-13) umfasst.

## Claims

1. Illumination apparatus for producing an optical mark in a region outside a vehicle, **characterized by**
- a light source (30), which is adapted to produce, optionally, light of different wavelengths in dependence on actuation,
- an optical apparatus (33), which is adapted to output different light patterns (15, 20-22) as the optical mark in dependence on a wavelength of light that is incident on the optical apparatus (33), and
- a control apparatus (35) for actuating the light source (30).

2. Illumination apparatus according to Claim 1, **characterized in that** the light source (30) is adapted to produce, optionally, light in at least one first wavelength range or in a second wavelength range in dependence on the actuation, with the first wavelength range and the second wavelength range being different from one another.

3. Illumination apparatus according to Claim 1 or 2, **characterized in that** the light source (30) comprises
- a multicolour light-emitting diode apparatus or
- a multicolour laser apparatus.

4. Illumination apparatus according to one of the preceding claims, **characterized in that** the optical apparatus (33) comprises a hologram.

5. Illumination apparatus according to one of the preceding claims, **characterized in that** the different light patterns (15, 20-22) comprise:
- circle segments of different sizes,
- circle segments of different forms,
- circle segments of different orientations,
- circle segments at different positions,
- lines (20-22) of different sizes,
- lines (20-22) of different forms,
- lines (20-22) of different orientations,
- lines (20-22) at different positions,
- dots (15) of different sizes,
- dots (15) in different numbers,
- dots (15) at different positions, and/or
- dot combinations in various orientations.

6. Illumination apparatus according to one of the preceding claims, **characterized in that** the illumination apparatus (16) furthermore comprises a diffractive optical unit (34) for projecting the light pattern (15, 20-22), which is produced by the optical apparatus (33), in the region (17).

7. Illumination apparatus according to one of the preceding claims, wherein the control apparatus (35) is furthermore able to be coupled with a gesture recognition apparatus of the vehicle (10) which is adapted to recognize a gesture performed by a user of the vehicle (10) within the region (17) and capture an ambient brightness in the region (17),
**characterized in that** the control apparatus (35) is adapted to set the wavelength of the light that is output by the light source (30) in dependence on the ambient brightness.

8. Illumination apparatus according to one of the preceding claims, wherein the control apparatus (35) is furthermore able to be coupled with a gesture recognition apparatus of the vehicle (10) which is adapted to recognize a gesture performed by a user of the vehicle (10) within the region (17) and to provide ground type information that indicates a type of the ground within the region (17),
**characterized in that** the control apparatus (35) is adapted to set a wavelength of the light that is output by the light source (30) in dependence on the ground type information.

9. Illumination apparatus according to one of the preceding claims, **characterized in that** the control apparatus (35) is adapted to actuate the light source (30) such that the light source (30) produces light of different wavelengths in a time sequence such that the time sequence of different light patterns (15, 20-22) that is output by the optical apparatus (33) produces chase lighting within the region (17).

10. Vehicle comprising:
- an illumination apparatus (16) according to one of the preceding claims and
- a vehicle opening (11-13),
wherein the illumination apparatus (16) is arranged on the vehicle (10) such that the region (17) on which the illumination apparatus (16) produces the optical mark comprises a region in front of the vehicle opening (11-13) .

## Revendications

1. Dispositif d'éclairage destiné à générer un marquage optique dans une zone à l'extérieur d'un véhicule, **caractérisé par** :
- une source de lumière (30) qui est configurée pour générer au choix de la lumière à différentes longueurs d'onde en fonction d'un pilotage,
- un dispositif optique (33) qui est configuré pour délivrer des motifs lumineux (15, 20-22) différents en tant que marquage optique en fonction d'une longueur d'onde de la lumière incidente sur le dispositif optique (33), et
- un dispositif de commande (35) destiné à piloter la source de lumière (30).

2. Dispositif d'éclairage selon la revendication 1, **caractérisé en ce que** la source de lumière (30) est configurée pour générer au choix, en fonction du pilotage, de la lumière dans au moins une première plage de longueurs d'onde ou dans une deuxième plage de longueurs d'onde, la première plage de longueurs d'onde et la deuxième plage de longueurs d'onde étant différentes.

3. Dispositif d'éclairage selon la revendication 1 ou 2, **caractérisé en ce que** la source de lumière (30) comporte
- un dispositif à diodes électroluminescentes multicolore ou
- un dispositif à laser multicolore.

4. Dispositif d'éclairage selon l'une des revendications précédentes, **caractérisé en ce que** le dispositif optique (33) comporte un hologramme.

5. Dispositif d'éclairage selon l'une des revendications précédentes, **caractérisé en ce que** les différents motifs lumineux (15, 20-22) comprennent :
- des segments de cercle de différentes tailles,
- des segments de cercle de différentes formes,
- des segments de cercle de différentes orientations,
- des segments de cercle à différentes positions,
- des lignes (20-22) de différentes tailles,
- des lignes (20-22) de différentes formes,
- des lignes (20-22) de différentes orientations,
- des lignes (20-22) à différentes positions,
- des points (15) de différentes tailles,
- des points (15) en différents nombres,
- des points (15) à différentes positions, et/ou
- des combinaisons de points dans différentes orientations.

6. Dispositif d'éclairage selon l'une des revendications précédentes, **caractérisé en ce que** le dispositif d'éclairage (16) comporte en outre un objectif diffractif (34) destiné à projeter le motif lumineux (15, 20-22) généré par le dispositif optique (33) dans la zone (17) .

7. Dispositif d'éclairage selon l'une des revendications précédentes, le dispositif de commande (35) pouvant en outre être connecté à un dispositif de reconnaissance gestuelle du véhicule (10), lequel est configuré pour reconnaître un geste exécuté par un utilisateur du véhicule (10) dans la zone (17) et pour détecter une luminosité ambiante dans la zone (17), **caractérisé en ce que** le dispositif de commande (35) est configuré pour régler la longueur d'onde de la lumière émise par la source de lumière (30) en fonction de la luminosité ambiante.

8. Dispositif d'éclairage selon l'une des revendications précédentes, le dispositif de commande (35) pouvant en outre être connecté à un dispositif de reconnaissance gestuelle du véhicule (10), lequel est configuré pour reconnaître un geste exécuté par un utilisateur du véhicule (10) dans la zone (17) et pour délivrer une information sur la nature du sol, laquelle indique une nature d'un sol dans la zone (17), **caractérisé en ce que** le dispositif de commande (35) est configuré pour régler une longueur d'onde de la lumière émise par la source de lumière (30) en fonction de l'information sur la nature du sol.

9. Dispositif d'éclairage selon l'une des revendications précédentes, **caractérisé en ce que** le dispositif de commande (35) est configuré pour piloter la source de lumière (30) de telle sorte que la source de lumière (30) génère séquentiellement dans le temps de la lumière à des longueurs d'onde différentes, de telle sorte que la séquence chronologique de différents motifs lumineux (15, 20-22) délivrée par le dispositif optique (33) produit une lumière défilante dans la zone (17) .

10. Véhicule, comprenant :
- un dispositif d'éclairage (16) selon l'une des revendications précédentes, et
- une ouverture de véhicule (11-13),
le dispositif d'éclairage (16) étant disposé sur le véhicule (10) de telle sorte que la zone (17) sur laquelle le dispositif d'éclairage (16) génère le marquage optique comprend une zone devant l'ouverture de véhicule (11-13).
